Europäisches Patentamt

European Patent Office

Office européen des brevets

(11) Publication number : **0 545 737 A1**

## (12) EUROPEAN PATENT APPLICATION

(21) Application number : **92311117.3**

(22) Date of filing : **07.12.92**

(51) Int. Cl.⁵ : **G01D 5/36**

(30) Priority : **06.12.91 US 804865**

(43) Date of publication of application :
**09.06.93 Bulletin 93/23**

(84) Designated Contracting States :
**CH DE FR GB LI**

(71) Applicant : **HUGHES AIRCRAFT COMPANY**
**P.O. Box 80028**
**Los Angeles, CA 90080-0028 (US)**

(72) Inventor : **Cunniff, John**
**224 Compo Road**
**Westport, CT 06880 (US)**

(74) Representative : **Colgan, Stephen James et al**
**CARPMAELS & RANSFORD 43 Bloomsbury**
**Square**
**London WC1A 2RA (GB)**

(54) **Coded fiducial.**

(57)   An optically detectable fiducial marker that utilizes a predetermined multi-bit binary coded pattern to provide levels of detectability and spatial resolution not found in conventional fiducials. The fiducial marker has a capture range equal to the length of a predetermined multi-bit binary coda utilized to form the fiducial, such that the capture range increases as the length of the code increases. To attain optimum performance, the fiducial marker utilizes a binary code exhibiting good aperiodic correlation properties. Optical encoding of the fiducial marker in accordance with a predetermined multi-bit binary coded pattern enables an optical scanner that is responsive to the optically encoded bit-pattern to locate a reference point with a high degree of certainty and with a spatial resolution that is a fraction of a spatial subtense of a single bit in the bit-pattern.

FIG. 1.

## FIELD OF THE INVENTION:

This invention relates to a fiducial, or marker, and to a method of optically detecting a fiducial marker that utilizes a predetermined multi-bit binary coded pattern.

## BACKGROUND OF THE INVENTION:

A conventional fiducial is a dot, cross, small circle, box, etc. that is provided upon a surface, and which can be used, inter alia, to establish a position of the surface relative to a fiducial detector. A problem that arises during the use of a conventional fiducial of small size is a difficultly in locating the fiducial with the detector. A further problem that arises is a general requirement that an uncertainty as to the fiducial's location be minimized prior to searching for the fiducial. A sufficient capture range and probability of interception are two critical characteristics that are necessary for correct operation of a fiducial detection system. Capture range is defined as a range wherein a signal is received that is sufficient to operate a system employing correlation detectors. A correlation detector is a device in which a signal is compared, point by point, with a reference signal. The detector outputs a signal that represents a measure of similarity between the signal and the reference signal. In the case of fiducial detection, the correlation process is typically that of autocorrelation. As employed herein, the term autocorrelation is defined as a measure of similarity between a signal and a phase-shifted version of the same signal.

In an attempt to expand the capture range and increase the probability of intercepting the fiducial during a search, crossed lines have been used as fiducials. However, although crossed lines extend the capture range, they do not increase the resolution in establishing a position of the surface, on which the fiducial is disposed, relative to a fiducial detector.

What is not provided in conventional fiducials or registration markers, and what is thus an object of the present invention to provide, is a fiducial that utilizes a predetermined multi-bit code pattern to increase the probability of intercepting the fiducial during a search and to improve the resolution in establishing a position of a surface, on which a fiducial is disposed, relative to a fiducial detector. The present invention also provides a fiducial that has a capture range equal to a length of the code pattern. Hence, the capture range is increased by increasing the number of bits in the code.

## SUMMARY OF THE INVENTION

The foregoing and other problems are overcome and the objects of the invention are realized by an optically detectable fiducial marker that utilizes a predetermined multi-bit binary coded pattern to provide levels of detectability and spatial resolution not found in conventional fiducials. The fiducial marker has a capture range equal to the length of a predetermined multi-bit binary code utilized to form the fiducial, such that the capture range increases as the length of the code increases. To attain optimum performance, the fiducial marker utilizes a binary code exhibiting good aperiodic correlation properties. Optical encoding of the fiducial marker in accordance with a predetermined multi-bit binary coded pattern enables an optical scanner that is responsive to the optically encoded bit-pattern to locate a reference point with a high degree of certainty and with a spatial resolution that is a fraction of a spatial subtense of a single bit in the bit-pattern.

## BRIEF DESCRIPTION OF THE DRAWING

The above set forth and other features of the invention are made more apparent in the ensuing Detailed Description of the Invention when read in conjunction with the attached Drawing, wherein:

Fig. 1 illustrates a fiducial formed from two-dimensional, seven-bit Barker Codes having an autocorrelation function showing maximum mainlobe response and sidelobes that do not exceed an amplitude of one.

Fig. 2 illustrates quadrature pairs of seven-bit Barker Code fiducials.

Fig. 3 illustrates autocorrelation functions for quadrature pairs of seven-bit Barker Codes.

Fig. 4 illustrates one-dimensional Barker Code fiducials combined for two-dimensional position fixing.

Fig. 5 is a block diagram of an optical fiducial detection system in which the system detects optically reflective and optically absorptive regions within a fiducial.

Fig. 6 is a block diagram of an optical fiducial detection system in which the system detects transparent and opaque regions within the fiducial.

## DETAILED DESCRIPTION OF THE INVENTION

The fiducial marker of the present invention utilizes a predetermined multi-bit binary code. When code sequences are utilized in optical detection systems, it is important that the code exhibit the least probability of false synchronization. Code sequences utilized for synchronization purposes are typically aperiodic.

The autocorrelation function of a code sequence defines the correlation properties of that code sequence and imparts information that is necessary to determine whether a particular code sequence is suitable for synchronization purposes. The fiducial marker of the present invention utilizes a predetermined multi-bit binary code constructed in accordance with a Barker Code. Barker Codes exhibit excellent aperiodic correlation properties, i.e., the autocorrelation function sidelobes do not exceed a magnitude of one. Since Barker Codes have a minimum peak sidelobe magnitude, they exhibit low probability of false synchronization. There are at present no known other suitable codes of odd bit-length, and none of even bit-length less than 6084 bits.

In general, in the autocorrelation function of a Barker Code of n-bits, the mainlobe magnitude is n-times the magnitude of the sidelobe. Therefore, when correlation occurs, a seven-bit Barker Code exhibits a maximum mainlobe magnitude that is seven times the magnitude of any sidelobe response.

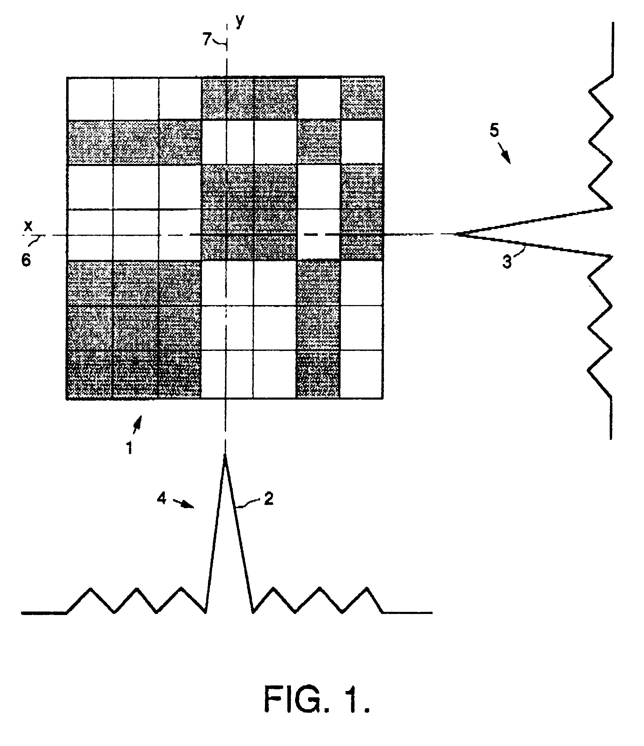

In Figure 1, a fiducial marker 1 is shown that is comprised of a two-dimensional array. Each row and column of the array includes a seven-bit Barker Code represented by the sequence (+ + + - - + -), or its complement, (- - - + + - +), where (+) designates a dark region and (-) designates a white region. A binary representation can also be used, hence the sequence, (+ + + - - + -) is represented as (1 1 1 0 0 1 0), and its complement, (- - - + + - +), is represented as (0 0 0 1 1 0 1). Autocorrelation functions 4 and 5 exhibit mainlobes 2 and 3 having a maximum magnitude or amplitude when the center of the fiducial is aligned with the point of intersection of the X coordinate axis 6 and Y coordinate axis 7. As the X coordinate axis 6 and the Y coordinate axis 7 move off center of the corresponding mainlobe responses 3 and 2, the mainlobe response or magnitude decreases. Hence, mainlobe response or magnitude is related to the displacement from the center bit of the fiducial. The fiducial shown in Figure 1 is realized by a two-dimensional array of optically encoded regions arranged in accordance with the Barker Code sequence.

In one embodiment of the invention, the optically encoded regions are comprised of optically reflective and optically absorptive regions, such that every dark region is comprised of an optically absorptive region and every white region is comprised of an optically reflective region. While the fiducial is being exposed to optical radiation, an optical detector (not shown in Fig. 1) determines whether a specific region is reflecting the optical radiation or absorbing the optical radiation. The optical detector output thus reconstructs the Barker Code represented by the optically reflective and absorptive regions.

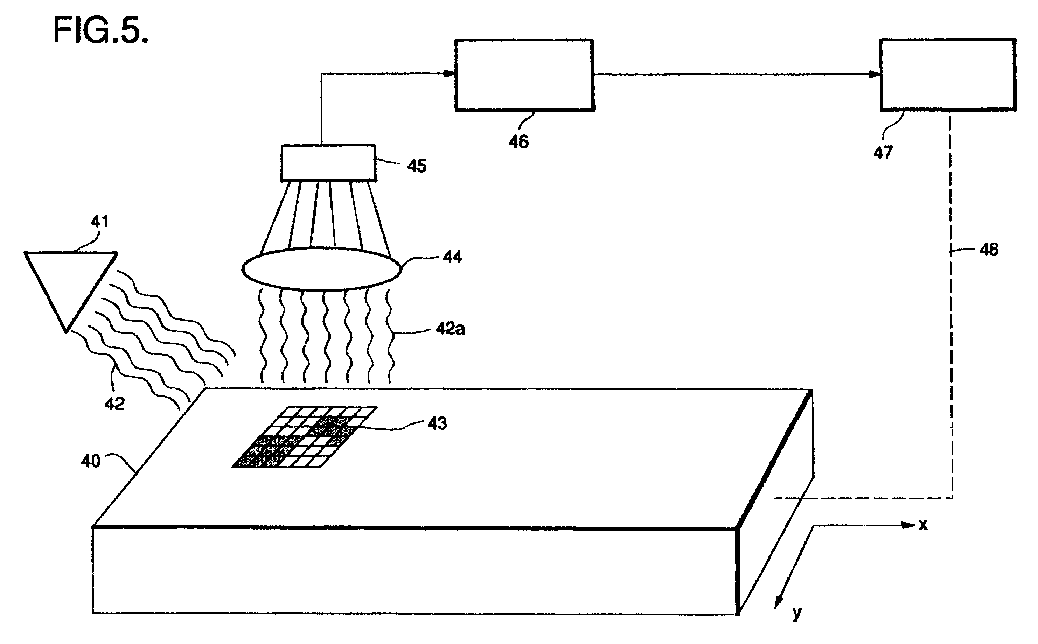

Such an optically encoded fiducial is utilized in the closed loop electro-optic system shown in Figure 5. The optically encoded fiducial 43 disposed on surface 40 is illuminated with a source of optical radiation 41. The optically encoded regions of the fiducial 43 either reflect the optical radiation 42a or absorb the optical radiation. Reflected optical radiation 42a passes through lens 44 and is detected by photodetector 45. By providing relative motion between the photodetector 45 and the fiducial-bearing surface, 40, the photodetector 45 output reconstructs the Barker Code sequence or portions thereof represented by the optically encoded regions of the fiducial 43. The reconstructed code sequence is coupled into processor 46 which performs two autocorrelation functions, one responsive to the code detected on the X coordinate axis and another responsive to the code detected on the Y coordinate axis. Correlation occurs with respect to both axes when the photodetector 45 is registered with the center of the fiducial, which is the point of intersection of the X and Y coordinate axes, and is the center bit of the Barker Code in both the X and Y coordinate axes. Correlation is independent of whether the photodetector is registered with the center of the base code, (1 1 1 0 0 1 0), or its complement, (0 0 0 1 1 0 1). When correlation occurs, the correlation of the respective Barker Codes, detected along both X and Y coordinate axes, each exhibit a mainlobe response having maximum magnitude.

If correlation does not occur on either or both axes, the processor 46 sends a correction signal to translator 47. The correction signal contains information pertaining to the alignment of the surface 40 so as to achieve correlation with respect to both coordinate axes. The translator 47 translates the correction signal into movement of the surface 40 about the X and Y coordinate axes in order to align the surface 40 such that correlation occurs with respect to both X and Y coordinate axes. In this regard the translator 47 may be embodied within a well-known X-Y positioning stage.

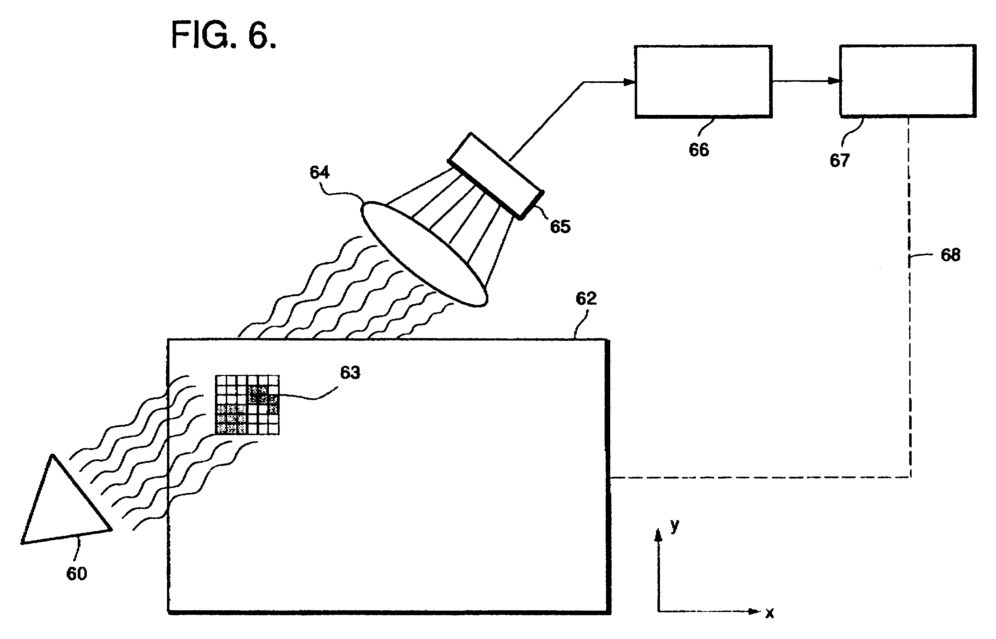

A further embodiment of the invention is shown in Figure 6, wherein a fiducial 63 comprised of transparent and opaque regions is disposed on surface 62. Light source 60 emits optical radiation onto the fiducial 63. Optical radiation passing through the transparent regions of the fiducial 63 passes through lens 64 and is detected by photodetector 65. By providing relative motion between the photodetector 65 and the fiducial-bearing surface 62, the output of photodetector 65 reconstructs the Barker Code sequence or portions thereof, which is represented by the optically encoded regions of the fiducial 63. The reconstructed code sequence is sent to processor 66 which performs two correlations, one responsive to the code detected on the X coordinate axis and another responsive to the code detected on the Y coordinate axis. Correlation occurs with respect to both axes when the photodetector array 65 is registered with the center of the fiducial, which is the point of intersection of the X and Y coordinate axes and is the center bit of the Barker Code in both the X and Y coordinate axes. Correlation is independent of whether the photodetector is registered with the center of the base code, (1 1 1 0 0 1 0), or its complement, (0 0 0 1 1 0 1). When correlation does occur, the Barker Codes detected along both X and Y coordinate axes each exhibit a mainlobe response having a maximum magnitude.

In a closed loop control system, such as the aforementioned systems of Figs. 5 and 6, the slope of the mainlobe response is used as an error sensing control characteristic. The error sensing control characteristic provides 2n amplitude units per bit of registration error. A control system using that control characteristic, and which servos to a predetermined level, provides control of position within the center bit to error levels on the order of $1/2n(SNR)$, where n is the number of bits in the code and SNR is the signal to noise ratio at the summing junction of the control system.

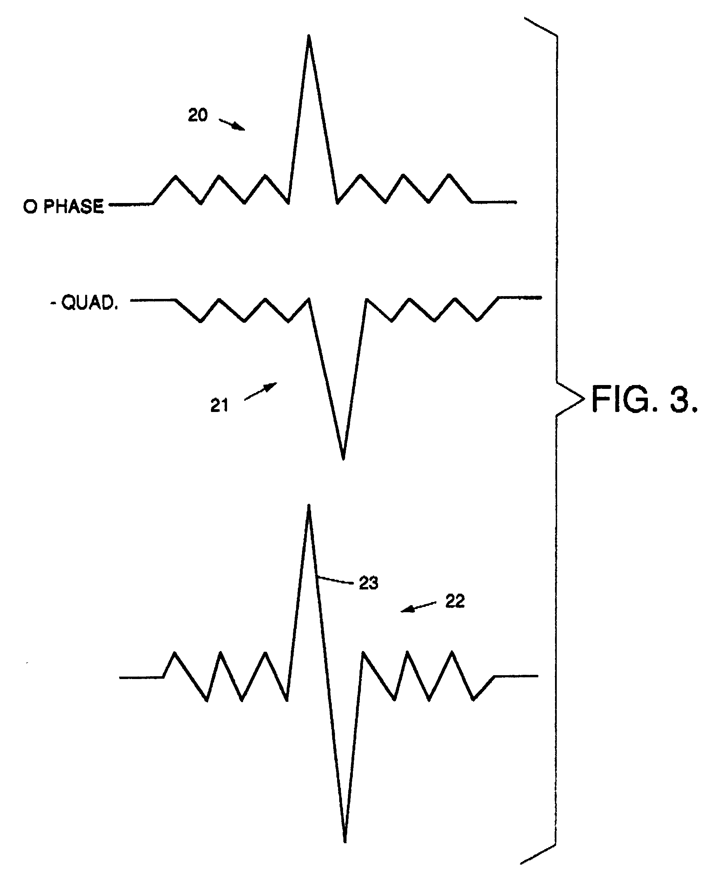

In Fig. 3 there is shown the resulting autocorrelation function 22 of another embodiment of the invention which utilizes a reference phase fiducial, having a corresponding autocorrelation function 20, and a quadrature fiducial, having a corresponding autocorrelation function 21. This configuration produces a control characteristic, which is represented by autocorrelation function 22, and is comprised of a mainlobe response 23 being centered on zero amplitude and having a steep slope. A correlation detector, which has an output representing the autocorrelation of a detected code, is associated with the reference phase fiducial and the quadrature fiducial. The output of the correlation detector associated with the quadrature fiducial is subtracted from the output of the correlation detector associated with the reference phase fiducial. In order to achieve an optimum alignment error signal, the center bit of the reference phase fiducial and the center bit of the quadrature fiducial are offset from one another by a predetermined distance of one-half bit. The resulting autocorrelation function 22 is shown in Fig. 3.

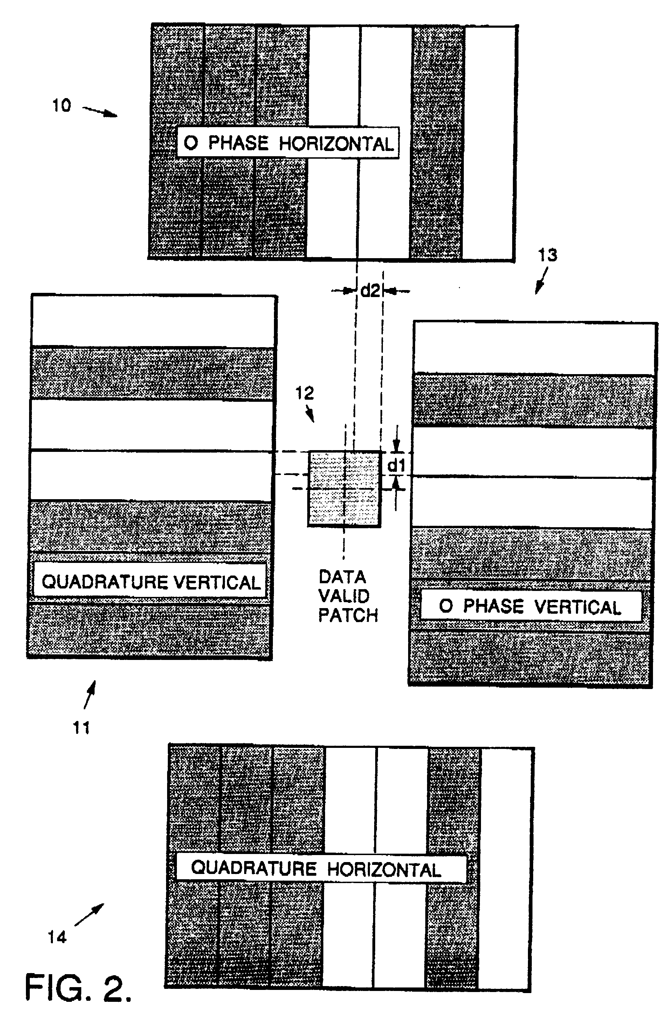

Figure 2 illustrates a configuration comprising two pairs of one-dimensional zero phase fiducials (horizontal 10 and vertical 13) and two pairs of one-dimensional quadrature fiducials (horizontal 14 and vertical 11). When the output of the quadrature fiducial correlation detector is subtracted from the output of the reference phase fiducial correlation detector, the control characteristic shown in Figure 3 results. The center bit of the horizontal reference phase fiducial and the center bit of the horizontal quadrature fiducial are offset from one another by a predetermined distance d1. Similarly, the center bit of the vertical reference phase fiducial and the center bit of the vertical quadrature fiducial are offset from one another by a predetermined distance d2 equal to one-half bit ("quadrature" implies a one-half bit; it is the spatial analogue of 90° in temporal phase). This resulting control characteristic has a slope that is twice that of the slope of the basic autocorrelation function and a mainlobe magnitude that is twice that of the mainlobe of the basic autocorrelation function.

However, this control characteristic exhibits possibilities for false locks or synchronization at each of the sidelobes, although the slope and amplitude of each sidelobe is only 1/n of that of the mainlobe. In order to prevent false lock or incorrect synchronization, an optically distinguishable "data valid" patch 12 is centered on the null point (zero amplitude) and is used to confirm mainlobe lock or correct synchronization.

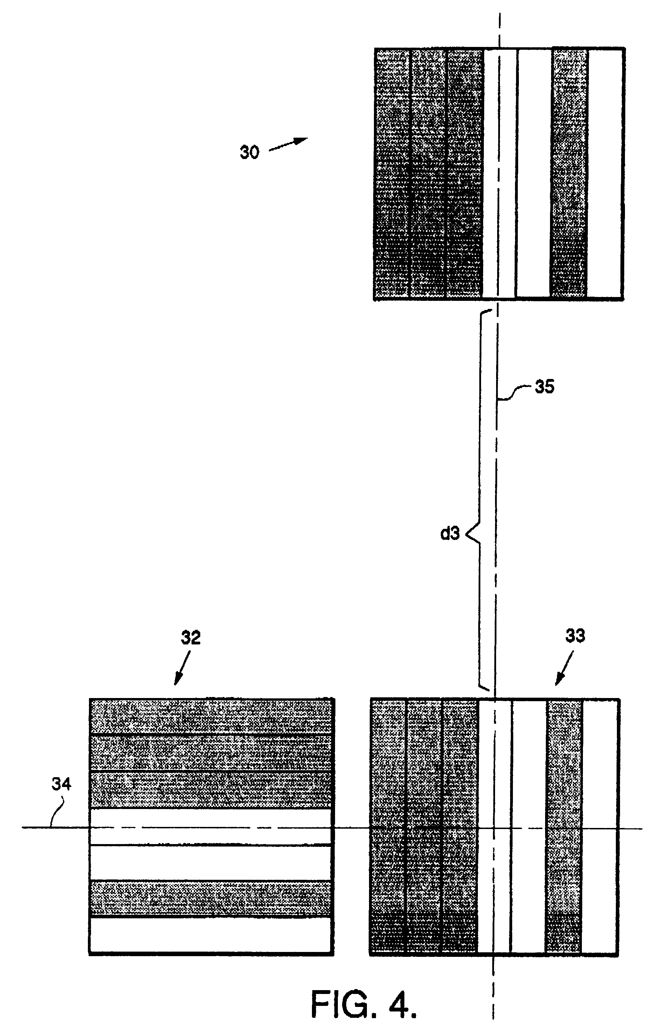

A further embodiment of the invention is shown in Figure 4, wherein two proximately disposed one-dimensional fiducials 32, 33 are provided in combination with a third one-dimensional fiducial 30 that is spaced an arbitrary distance d3 from the fiducials, 32, 33. These three fiducials are combined for position fixing. In this configuration, fiducials 32 and 33 are aligned with a first coordinate axis 34 and fiducials 30 and 33 are aligned with a second coordinate axis 35. The first and second coordinate axes 34 and 35 are typically orthogonal to one another and intersect with each other at a position relative to a predetermined one of the bits of fiducial 33. Fiducial 30 constrains rotation about the first coordinate axis 34 formed by fiducials 32 and 33 in a manner analogous to a kinematic mechanical mount. Such an arrangement of fiducials may be used, for example, to control the orientation of a silicon wafer during a semiconductor manufacturing process.

Having thus described the several embodiments of the coded fiducial marker of the invention, there is now described a first method of optically recognizing a predetermined binary coded pattern within a one-dimensional fiducial that is disposed upon a surface. The method comprises the following steps:

1. Providing upon a surface a multi-bit fiducial comprised of a plurality of optically distinguishable regions arranged in a one-dimensional array.

2. Illuminating the fiducial with a source of optical radiation.

3. Detecting an optical signal generated by the fiducial in response to the illumination.

4. Producing a detection signal having a plurality of first states and second states representing the multi-bit encoding.

5. Performing a correlation process on the detection signal.

6. Comparing by correlation the detected replica of the code sequence to a stored reference sequence.

7. Producing a correction signal if the correlation of the detected replica of the code sequence with the stored reference sequence does not produce a null.

8. Translating the correction signal into physical movement along a coordinate axis of the surface containing the fiducial.

9. Repeating steps 1-8 until the autocorrelation function indicates by a null in the correction signal that the fiducial marker is positioned at a predetermined position relative to the detector.

A second method of optically recognizing a predetermined two-dimensional multi-bit binary code pattern disposed upon a surface is now described. This method comprises the steps of:

1. Providing upon a surface a multi-bit encoded fiducial comprised of a plurality of optically distinguishable regions arranged in a two-dimensional array.

2. Illuminating the fiducial with a source of optical radiation.

3. Detecting an optical signal, along a first coordinate axis, generated by the fiducial in response to the illumination.

4. Producing a first detection signal having a plurality of first states and second states representing the multi-bit encoding.

5. Detecting an optical signal, along a second coordinate axis, generated by the fiducial in response to the illumination.

6. Producing a second detection signal having a plurality of first states and second states representing the multi-bit encoding.

7. Performing a correlation process on the first detection signal with a first reference signal.

8. Performing a correlation process on the second detection signal with a second reference signal.

9. Producing a first correction signal if the correlation of the first detection signal with the first reference signal does not produce a null.

10. Producing a second correction signal if the correlation of the second detection signal with the second reference signal does not produce a null.

11. Translating the first and second correction signals into physical movement along the first and second coordinate axes of the surface containing the fiducial.

12. Repeating steps 1-11 until the correlation correction signal indicates that the fiducial marker is positioned at a predetermined position relative to the detectors.

The two methods may be implemented using transparent and opaque regions for representing the fiducial, or with optically reflective and optically absorptive regions.

The invention offers improvement in the precision with which, for example, the centroids of features are located on photographic plates, film, or on wafers of silicon, or other materials in semiconductor manufacturing. In general, the teaching of the invention may be employed for a number of different applications wherein it is desired to accurately position a body or a surface.

Although described in the context of a Barker encoded fiducial, it should be realized that the teaching of the invention is not limited thereto. For example, the invention may also utilize other types of codes such as maximal-length binary shift-register sequences or Barker Codes in which each segment of the code (analogous to a bit) is itself a Barker Code. Table 1 illustrates the properties of several maximum-length binary codes that are suitable for use with the invention.

## TABLE 1

| DEGREE (NUMBER OF STAGES) AND LENGTH | POLYNOMIAL OCTAL | LOWEST PEAK SIDELOBE AMPLITUDE | LOWEST RMS SIDELOBE AMPLITUDE |
|---|---|---|---|
| 1 (1) | 003* | 0 | 0 |
| 2 (3) | 007* | -1 | 0.707 |
| 3 (7) | 013* | -1 | 0.707 |
| 4 (15) | 023* | -3 | 1.39 |
| 5 (31) | 045* | -4 | 1.89 |
| | | | 1.74 |
| | | | 1.96 |
| 6 (63) | 103* | -6 | 2.62 |
| | | | 2.81 |
| | | | 2.38 |
| 7 (127) | 203* | -9 | 4.03 |
| | 211* | -9 | 3.90 |
| | 235 | -9 | 4.09 |
| | 247 | -9 | 4.23 |
| | 253 | -10 | 4.17 |
| | 277 | -10 | 4.15 |
| | 313 | -9 | 4.04 |
| | 357 | -9 | 4.18 |
| 8 (255) | 435 | -13 | 5.97 |
| | 453 | -14 | 5.98 |
| | 455 | -14 | 6.10 |
| | 515 | -14 | 6.08 |
| | 537 | -13 | 5.91 |
| | 543 | -14 | 6.02 |
| | 607 | -14 | 6.02 |
| | 717 | -14 | 5.92 |
| 9 (511) | (24 codes) | -19 (1743 polynom.) | 8.0 |
| 10 (1,023) | (30 codes) | -29 (3023 polynom.) | |
| 11 (2,047) | (88 codes) | | |
| 12 (4,095) | (72 codes) | | |
| 13 (8,191) | (315 codes) | | |

It is known that one way of realizing longer codes from the Barker Codes is to phase code within each segment of one Barker Code with another Barker Code. This is known as Barker squared or combined Barker Coding. The properties of such codes are determined by combining a Barker Code of length four with the code of length 13 in two ways. When each bit of the 13-bit word is coded into four bits, the zero doppler autocorrelation function of the waveform yields four side peaks of amplitude 13 located at range offsets of ± 1, ± 3 segments and 12 peaks of amplitude four. When each bit of the four-bit word is coded into 13 bits, the same number of side peaks of amplitude greater than unity appears, but the location of the side peaks of amplitude 13 occurs at offsets of ± 13 and ± 39 segments. The main lobe amplitude of the autocorrelation function in both cases is 52.

Thus, based on the foregoing teaching, those having ordinary skill in the art may derive a number of modifications to the embodiments of the invention disclosed above. The invention is therefore not to be construed to limited only to these disclosed embodiments, but it is instead intended to be limited only as defined by the appended claims.

## Claims

1. An optically detectable fiducial marker disposed upon a surface, the fiducial marker being comprised of a pattern encoded in accordance with a multi-bit binary code selected for maximizing a response of an optical sensor when the sensor is positioned at a position relative to a predetermined one of the bits.

2. The optically detectable fiducial marker as set forth in claim 1 further including means for providing relative motion between the surface and the optical sensor.

3. The optically detectable fiducial marker as set forth in claim 1 wherein the pattern encoded in accordance with a multi-bit binary code is comprised of a plurality of optically distinguishable regions.

4. The optically detectable fiducial marker as set forth in claim 1 wherein the pattern encoded in accordance with a multi-bit binary code is comprised of a plurality of optically encoded regions arranged in a one-dimensional array, each of the plurality of optically encoded regions representing one bit of the multi-bit binary code.

5. The optically detectable fiducial marker as set forth in claim 1 wherein the pattern encoded in accordance with a multi-bit binary code is comprised of a two-dimensional array of optically encoded regions.

6. Apparatus for optical recognition of a predetermined multi-bit binary code pattern provided upon a surface as a plurality of optically distinguishable bits, the apparatus comprising an optical detector means responsive to the predetermined multi-bit binary code pattern and a complement thereof, the detector means outputting a signal having a maximum amplitude when the detector means is centered on a predetermined bit of the predetermined binary code pattern.

7. Apparatus for optical recognition of a predetermined multi-bit binary code pattern provided upon a surface as a plurality of optically distinguishable bits arranged in a two-dimensional array, the apparatus comprising first and second optical detector means, the first and second optical detector means each being responsive to the predetermined multi-bit binary code pattern and a complement thereof for outputting a signal having a maximum amplitude when the first and second optical detector means are positioned at a position relative to a predetermined one of the bits.

8. The apparatus as set forth in claim 7 further including means for providing relative motion between the surface and the first and second optical detector means.

9. The apparatus as set forth in claim 7 wherein the plurality of optically distinguishable bits is comprised of a plurality of optically opaque and optically transparent regions.

10. The apparatus as set forth in claim 7 wherein the plurality of optically distinguishable bits is comprised of a plurality of optically reflective and optically absorptive regions.

FIG. 1.

10

O PHASE HORIZONTAL

13

d2

11

QUADRATURE VERTICAL

12

d1

DATA
VALID
PATCH

O PHASE VERTICAL

14

QUADRATURE HORIZONTAL

FIG. 2.

FIG. 3.

30

35

d3

32

34

33

FIG. 4.

11

# FIG.5.

EP 0 545 737 A1

FIG. 6.

# EUROPEAN SEARCH REPORT

**European Patent Office**

Application Number

EP 92 31 1117

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 224 237 (ALCATEL)<br>* abstract; figures * | 5,7-10 | G01D5/36 |
| X | OPTICS COMMUNICATIONS<br>vol. 83, no. 1/2, 15 May 1991, AMSTERDAM NL<br>pages 15 - 20<br>YAJUN LI 'bar codes with special correlations like those of Barker codes'<br>* the whole document * | 1-4,6 | |
| Y | | 5,7-10 | |
| X | MEASUREMENT SCIENCE AND TECHNOLOGY<br>vol. 9, no. 1, September 1990, BRISTOL GB<br>pages 848 - 851<br>YAJUN LI 'design of zero reference marks for grating measurement systems: a new method'<br>* the whole document * | 1-4,6 | |
| Y | | 5,7-10 | |

TECHNICAL FIELDS SEARCHED (Int. Cl.5)

G01D

The present search report has been drawn up for all claims

| Place of search | Date of completion of the search | Examiner |
|---|---|---|
| THE HAGUE | 22 FEBRUARY 1993 | LLOYD P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

14